## Europäisches Patentamt

## European Patent Office

## Office européen des brevets

(19)

(11) Veröffentlichungsnummer: **0 136 335**
**B1**

(12) # EUROPÄISCHE PATENTSCHRIFT

(45) Veröffentlichungstag der Patentschrift:
14.10.87

(51) Int. Cl.⁴: **A 23 L 1/16**

(21) Anmeldenummer: 84901071.5

(22) Anmeldetag: 09.03.84

(86) Internationale Anmeldenummer:
PCT/EP 84/00069

(87) Internationale Veröffentlichungsnummer:
WO 84/03421 (13.09.84 Gazette 84/22)

(54) **MISCHUNG FÜR SEMMELKNÖDEL UND VERFAHREN ZU IHRER HERSTELLUNG.**

(30) Priorität: 09.03.83 DE 3308375

(43) Veröffentlichungstag der Anmeldung:
10.04.85 Patentblatt 85/15

(45) Bekanntmachung des Hinweises auf die Patenterteilung:
14.10.87 Patentblatt 87/42

(84) Benannte Vertragsstaaten:
AT CH DE FR LI

(56) Entgegenhaltungen:
EP-A-0 041 641
DE-B-1 217 190
FR-A-2 137 872
FR-A-2 256 728
FR-A-2 321 850
FR-A-2 409 007
FR-A-2 409 015
FR-A-2 458 227

(73) Patentinhaber: PFANNI- WERKE OTTO ECKART KG,
Grafinger Strasse 6, D-8000 München 80 (DE)

(72) Erfinder: KLUGE, Günter, Johann- Hackl- Ring 21,
D-8011 Neukeferloh (DE)
Erfinder: PRASCH, Edgar, Itzling 9, D-8050 Freising
(DE)

(74) Vertreter: Patentanwälte Müller- Boré, Deufel,
Schön, Hertel, Lewald, Otto, Isartorplatz 6,
D-8000 München 2 (DE)

## Beschreibung

Semmelknödel sind eine in den Alpenländern, insbesondere Süddeutschland und Österreich, sehr beliebte Beilage zu beispielsweise Fleisch- und Pilzgerichten. Ihre Güte hängt stark von der Saug- und Quellfähigkeit und damit auch der Porosität des verwendeten Ausgangsmaterials ab. Im Haushalt geht man von getrockneten, geschnittenen Semmeln aus, dem sogenannten Knödelbrot. Für die industrielle Fertigung hat es sich zur Aufrechterhaltung einer gleichmäßigen Qualität als notwendig erwesen, ein spezielles Brot von reproduzierbarer, gleichbleibender Qualität zu verwenden das maschinell zu Teilchen von etwa Erbsengröße geschnitten, mit etwas Milch, Eiweiß und den üblichen Zutaten wie Gewürzen usw. besprüht, getrocknet und in üblicher.

Weise gleich in Kochbeutel abgepackt wird, aus denen nach dem Kochen ein servierfertiger Knödel entnommen werden kann. Gerade bei Kochbeutelknödeln, die beim Kochen nicht frei quellen können, sondern durch den Kochbeutel in der Quellung begrenzt sind, ist die Struktur des "Knödelbrotes" von besonders großer Wichtigkeit um trotzdem einen lockeren saugfähigen Semmelknödel zu ergeben.

Es gibt zahlreiche Verfahren zur Herstellung von sich nicht entmischenden vorgefertigten Trockenprodukten zur Herstellung von Semmelknödeln. Beispielsweise zeigt die DE-PS-20 15 436 eine solche Mischung, die sämtliche für die Knödelzubereitung üblichen Bestandteile enthält, wobei Semmel- oder Weißbrotwürfel mit flüssigem Fett überzogen und auf diesen Fettüberzug Bindemittel ggf. weitere Zutaten aufgebracht werden.

Dieses Trockenprodukt geht von normalem grob zerkleinertem getrocknetem Gebäck aus. Bedingt durch dessen Struktur wird durch den Fettüberzug nicht nur der Kalorieninhalt stark erhöht, sondern auch das Saugvermögen beschränkt.

In der DE-AS-16 92 772 wird ein Gemisch von geriebenen, trockenen Semmeln und frischen Semmel- oder Weißbrotwürfeln mit Volleipulver, Trockeneiweiß, gewürfeltem geräucherten Speck, Salz, Petersilie und Muskat als Knödelmasse gezeigt, wobei die Semmel- und Weißbrotwürfel in heißem Fett angeröstet und getrocknet und nach dem Abkühlen mit den anderen Bestandteileninnig gemischt werden.

Die DE-PS-23 27 897 zeigt eine Mischung für Knödel aus Weizendunst, die allerdings keine Semmelknödel sondern sogenannte böhmische Knödel ergeben, wobei die Mischung Eimasse, Salz, Gerwürze und Treibmittel in der für Knödel üblichen Zusatzmenge und zusätzlich etwa 10 Gewichtsteile Puffreis enthält, wobei die Hälfte des Puffreis dünn mit Öl übersprüht und leicht geröstet ist. Als Treibmittel liegt ein Gemisch aus Natriumbicarbonat und Gluconsäure-δ-Lakton vor und die Eimasse besteht aus Trockenvollei und Trockeneigelb im Verhältnis 2:1. Diese Art von Knödel ist mit Semmelknödeln allerdings kaum vergleichbar.

Zur Herstellung mehr oder weniger feiner oder grobporiger verhältnismäßig homogener Teig- und Backwaren hat sich in lezter Zeit das sogenannte Thermoextrusionsverfahren, auch Kochextrusionsverfahren genannt, eingebürgert. Es werden vor allem Getreidegrieße und -mehle in Extrudern verarbeitet, in denen die Stärke in einem beheizten und mit einer kernprogressiven Schnecke ausgerüsteten Zylinderrohr durch kombinierte Wirkung von Feuchtigkeit, Wärme und Druck verkleistert und anschließend durch einen beheizten Düsenkopf ausgepresst wird. Wenn der Druckhoch genug ist expandiert das Produkt am Düsenausgang und vergrößert schon dabei sein Volumen erheblich (US-PS-3 615 675). Die DE-OS-29 50 927 zeigt die Anwendung dieses Verfahrens auf die Herstellung von "altem Brot", das sich zum Zerkleinern eignet, indem der extrudierte Teig unmittelbar nach der Extrusion unter Verwendung elektromagnetischer Strahlung unter solchen Bedingungen, daß ein gebackenes Brot mit einer Innentemperatur von ungefähr 80 bis 102°C entsteht, behandelt wird. Dieses gebackene "alte Brot" ist zur Aufmahlung in Brotbrösel, vor allem zur Verwendung als Paniermehl bestimmt. Auch die FR-A-2 458 227 zeigt ein ähnliches Verfahren, wobei beietwa 150 bis 190°C extrudiert und ohne zusätzliches Backen zu Semmelbröseln bzw. Paniermehl vermahlen wird.

Die DE-OS-30 04 787 zeigt ein Verfahren zur Herstellung eines Bäckereierzeugnisses durch Thermoextrusion, wobei zunächst auf herkömmliche Weise ein zu Brot verarbeitetes Erzeugnis geschaffen wird, das nach Durchführen des Knetens, Gärens und Backens einem Trocknungs- und/oder Röstvorgang ausgesetzt und gemahlen wird, wonach es der bekannten Thermoextrusion unterzogen wird. Dem als Ausgangsmaterial für die Extrusion verwendeten gebackenen Mahlgut kann zwischen 20 und 40 % frisches Mehl zugesetzt werden. Da das Ausgangsmaterial für die Extrusion ganz oder größtenteils gebacken ist, sollen diese Erzeugnisse unter den gegenüber dem nicht vorbearbeiteten Grundstoff ähnlichen Bedingungen nicht expandieren. Die Extrusion erfolgt bei 125 bis 145°C bei 160 bis 200 bar. Die EP-A-0 041 641 zeigt ein Thermoextrusionsverfahren in einem Doppelschneckenextruder, der hinter dem Extruderausgang eine Misch- und Scherzone hat, worauf dann die Formgebungsdüse folgt. Dabei ist die Feuchtigkeit des Verarbeitungsgutes von höchster Bedeutung, da nur bei Feuchtigkeiten von 12 bis 17 % gearbeitet werden kann, wobei die Produkte umso besser schmecken, je niedriger die Feuchtigkeit der Weizenmehlmischung ist. Ein Coaten und Agglomerieren des Extrudats ist nicht angesprochen, da eine andere Aufgabenstellung vorliegt. Auch ist über den Quellwert und den Expansionsgrad des Extrudats nichts ausgesagt.

Die FR-A-2 321 850 zeigt die Herstellung eines stark verkleisterten Extrudats mit eine᠆ Expansion auf das 3- bis 7-fache bei Teigen von 13 bis 25 % Wassergehalt. Über ein Becoaten ist nichts ausgesagt und die Extrudate sollen z. B. als Kartoffelchips oder Bisquits oder geblähter Mais dienen. Über die Möglichkeit der Verwendung als Semmelbrot zeigen somit diese beiden letzteren Veröffentlichungen nichts.

Es wurde nun gefunden, daß durch die Thermoextrusion bzw. Kochextrusion überraschenderweise auch ein Knödelbrot für Semmelknödel hergestellt werden kann, indem man von Weizenmehl, ggf. in Mischung mit Weizengrieß (Hart- oder Weichweizengrieß) und ggf. zugesetzten Semmelbrösel sowie üblichen Zusätzen, wie Eimasse, Salz und Gewürzen ausgeht. Dabei ist eine Mischung für Semmelknödel erhältlich durch Thermoextrusion der Ausgangsmischung bei einer Extrudertemperatur vor dem Extruderkopf von 110 bis 170° C, einem Druck im Extruder von 150 bis 200 bar beim Einschneckenextruder bzw. 35 bis 100 bar im Doppelschneckenextruder, und einem Wassergehalt der Extrusionsmischung vor dem Extrudieren zwischen 17 und 22 % unter Aufblähen des Extrudats auf das 2- bis 5-fache, und Zerschneiden des Extrudats auf Korngrößen von 2 bis 13 mm zu einem Material mit offenporigen Schnittflächen und einem Quellwert von 3 bis 5 ml/g, wobei ggf. auf diese Größe ausgesiebt wird, und Agglomerieren mit Ei und/oder Fett und/oder Milch und üblichen Zusätzen und ggf. Trocknen.

Eiweißreiche Mehle, wie zum Beispiel Mehle von Manitoba-Weizen (ca. 14 % Eiweißgehalt) sind bevorzugt. Als Zusätze können neben Weizengrieß und Semmelbrösel auch Stärke sowie andere Getreidemehle, z. B. von Hafer, Gerste, Roggen, verwendet werden. Bei Roggenmehl hat sich z. B. die Type 1150 gut· bewährt. Außerdem kann zusätzliches Eiweiß, wie Klebereiweiß, Sojaprotein, Hefe- usw. zugesetzt werden, wobei Hefe vorteilhafterweise auch in Form von 15 bis 30 %, insbesondere 25 Gew.-%, bezogen auf Gesamtmischung vor dem Extrudieren, an granuliertem Hefevorteig oder anstatt des üblichen Anmachwassers in Form einer Hefesuspension, insbesondere einer etwa 20 %igen Suspension von Bäckerhefe in Wasser zugesetzt werden kann, sowie Fette, Gewürze und Geschmacksstoffe, z. B. bis zu 0,5 % Genußsäuren, insbesondere 0,2 bis 0,4 %, bezogen auf Extrusionsmischung vor dem Extrudieren. Salz wird zweckmäßig in einer Menge von 1 bis 5 % zugesetzt. Gewünschtenfalls können Emulgatoren, wie z. B. Lecithine zugesetzt werden, wobei eine Menge bis zu 1 %·bevorzugt ist.

Ein Zusatz von bis zu 0,5 Gew.-% vergärbarem Zucker ist vorteilhaft, insbesondere beim Vorliegen von Hefe in der Mischung.

Man kann mit Weizenmehl allein arbeiten, jedoch kann man bis zu 50 % des Gesamtgewichtes an Semmelbröseln oder vermahlenem Rückbrot, Paniermehl oder vermahlenem Extrudat des vorliegenden Verfahrens zusetzen. Das Weizenmehl kann bis zu 80 % seiner Menge, vorzugsweise jedoch weniger als 30 %, insbesondere ca. 25 % durch Weizengrieß ersetzt werden, wobei der Rest vorzugsweise eiweißreiches Weizenmehl sein kann. Bei Verwendung von Weizengrieß wird vorzugsweise noch Fremdeiweiß zugesetzt, und zwar bis zu einer Menge von 20 % der Gesamtmischung vor dem Extrudieren. Wie schon erwähnt, kann dies vorteilhaft durch einen Zusatz von 15 bis 30 %, insbesondere ca. 25 % granuliertem Hefevorteig erfolgen. Hefevorteig, im süddeutschen Raum auch Dampfl genannt, ist bekanntlich der zur Vermehrung der Hefe benutzte Teig.

Stärken und andere Getreidemehle, insbesondere Roggenmehl, das vorzugsweise in einer Menge von 5 bis 15 %, insbesondere etwa 10 % eingesetzt wird, können das Weizenmehl in einer Menge von grundsätzlich bis zu 50 % ersetzen.

Zusätzliches Eiweiß kann in einer Menge zugesetzt werden, daß die Gesamteiweißmenge der Mischung (einschl. dem aus z. B. dem Weizenmehl stammenden Eiweiß) bis 30 beträgt, wobei Mengen bis 25 % bevorzugt sind. Ein Mindestgehalt von 10 % Eiweiß scheint günstig zu sein weshalb dies bevorzugt wird. Fett kann der Extrusionsmischung in einer Menge von bis zu ca. 5 % zugesetzt werden. Gewürze und Aromastoffe werden in den üblichen Mengen verwendet, wobei darauf zu achten ist, daß es sich um extruderfeste Gewürze und Aromastoffe handelt oder ihre Menge entsprechend eingestellt wird. Emulgatoren werden hier in einer Menge bis zu etwa 1 % eingesetzt.

Die Mischung der Ausgangsmaterialien kann durch wenige Vorversuche so eingestellt werden, daß sich ein Extrudat der gewünschten Textur ergibt. Die Verwendung eiweißreicher Mehle ist günstig und Struktur und Verhalten des Extrudats können durch weiteren Eiweißzusatz noch verbessert werden.

Die Verfahrensbedingungen der Kochextrusion sind die üblichen Bedingungen zur Erzielung einer Expansion auf das 2- bis 5-fache. Die Extrudertemperatur vor dem Extruderkopf beträgt 110 bis 170° C, der Druck im Einschneckenextruder ist 150 bis 200 bar bei 20 % Wassergehalt und die Schneckendrehzahl ist 300 bis 600 Upm beim Einschneckenextruder.

Der Wassergehalt der Extrusionsmischung bei Einschneckenextrudern liegt vorzugsweise zwischen 17 und 19 %.

Die Extrusion der Mischung unter den oben beschriebenen Bedingungen führt zu porösen Extrudaten mit Brotcharakter und einem Wassergehalt zwischen 7 und 12 %, insbesondere 9 bis 10 %. Bis zu diesem Wassergehalt lassen sich die Produkte direkt nach dem Extrudieren schneiden bzw. grob zerkleinern. Wenn man an der oberen Grenze des Wassergehalts der Extrusionsmischung arbeitet, kann es zweckmäßig sein, nach dem Extrudieren und vor dem Schneiden kurz auf unter 10 % Wassergehalt zu trocknen.

Bei Verwendung von Doppelschneckenextrudern sind die Verfahrensbedingungen entsprechend anzupassen, was mit wenigen Vorversuchen möglich ist. Die Schneckendrehzahl liegt bei Doppelschneckenextrudern meist beträchtlich tiefer, insbesondere bei 150 bis 350 Upm und der Druck liegt bei 35 bis 100 bar, insbesondere 35 bis 85 bar bei 20 % Wassergehalt. Der Wassergehalt der Extrusionsmischung liegt bei Doppelschneckenextrudern normalerweise ebenfalls tiefer, kann aber bis zu 22 % betragen. Da bei der Extrusion etwa 8 Wasser entweichen, ist der Wassergehalt des Extrudats etwa um diesen Wert geringer als der Ausgangswassergehalt der Extrusionsmischung. Dies gilt für Einschnecken- und Doppelschneckenextruder. Die Verweilzeit im Doppelschneckenextruder beträgt ca. 13-15 sec., die Extrusionstemperatur 135 bis 170 °C, insbesondere 150 bis 165 °C.

Das Extrudat hat eine geschlossene Oberflächenhaut jedoch höhere Porosität aber feinporigere Struktur als Semmeln, wobei bei geeigneter Verfahrensführung eine recht gleichmäßige Porosität erzielbar ist. Geeignetes Zerkleinern des Extrudats, z. B. in einer Schneidmühle, führt zu einem stückigen Material das überwiegend eine Korngröße von 2 bis 13 mm hat und gewünschtenfalls diese Größe, die bevorzugt ist, abgesiebt wird. Die Verwendung einer Schneidmühle hat den Vorteil, die nur wenig Feinanteile entstehen. Die so entstehenden Schnittflächen sind offenporig und verleihen dem Material eine gute Saug- und Quellwirkung. Es ist wichtig, daß bei diesem Schneiden die Schnittflächen nicht verklebt oder verschmiert werden. Der Quellwert des Extrudats, d.h. das Wasserbindevermögen, beträgt ca. 3 bis 5 ml/g, insbesondere 4 bis 4,2 ml/g. Dies wird gemessen indem 30 g Extrudat in ein Becherglas eingewogen und 200 ml Wasser von 60°C zugegeben werden. Nach 2-minütigem Stehenlassen wird durch Kippen des Glases alles nicht gebundene und nicht anhaftende Wasser (1/2 min lang) abgegossen (filtriert) und durch Differenzbildung zwischen dem zugegossenem Wasser und dem abgegossenem Wasser die aufgenommene Wassermenge bestimmt. Der Quellwert ist die Wasseraufnahme in ml/g. Das Schüttgewicht des Extrudats liegt zwischen 0,19 und 0,28 g/ml.

Das erhaltene grob zerkleinerte Extrudat wird becoatet (oberflächlich beschichtet), insbesondere mit Ei oder Eipulver und/oder Fett und/oder Milch oder Milchpulver. Auch Bindemittel können aufgebracht werden, insbesondere Stärke bzw. Mehl, oder auch Gewürze und Aromen und Mischungen daraus.

Beim Becoaten mit Ei oder Eipulver werden zweckmäßig verhältnismäßig hoch konzentrierte Lösungen mit bis zu etwa 30 % Ei in Wasser oder Ei mit Milch eingesetzt. Hier ist Vollei bevorzugt. Die gesamte Eimenge, berechnet als Trockensubstanz, die zum Agglomerieren erforderlich ist, beträgt 2 bis 10 Gewichts-% der Gesamtmenge. Bei Verwendung von Fett werden 5 bis 25 % eingesetzt, jedoch genügen 10-15 % üblicherweise für die Agglomerierung selbst. Der Begriff Fett umfaßt auch Öl. Falls nur Milch verwendet wird, wird eine Menge eingesetzt, die 2 bis 10 Gew.-% Trockensubstanz, bezogen auf Gesamtmenge, entspricht. Wird eine Mischung von 2 oder mehr dieser Agglomerierungsmittel eingesetzt, soll die Gesamtmenge jedenfalls 40 %, noch besser 30 %, bezogen auf Gesamtmenge des späteren Knödelbrotes nicht übersteigen. Stärke bzw. Mehl kann hier zusätzlich zu den Agglomerierungsmitteln ebenfalls zugesetzt werden, und zwar in Mengen von 5 bis 40 %, bezogen auf Gesamtgemisch, wobei jedoch die Mengen an Agglomerierungsmittel (Ei, Fett oder Milch) und Stärke 50 % der Gesamtmenge nicht übersteigen soll. Gewürze und Aromen oder Mischungen daraus können auch in dieser Stufe in üblicher Menge zugesetzt werden. Aus technischen Gründen wird die Agglomerierung zweckmäßig so durchgeführt, daß hinterher nicht oder nur wenig getrocknet werden muß, um Energie zu sparen.

Insbesondere können beim Agglomerierungsschritt zugesetzt werden: Fett, insbesondere gehärtetes Pflanzenfett, in einer Menge von 10 bis 20 Gew.-%, Weizenstärke, Kartoffelstärke oder Fremdmehl in einer Menge von 10 bis 20 Gew.-%, Magermilchpulver in einer Menge von 3 bis 6 %, das je nach Wunsch auch ganz oder teilweise als Milchkonzentrat eingesetzt werden kann (die Zahlen beziehen sich jedoch auf Trockenprodukt). Trockenei oder Trockeneigelb in einer Menge von 3 bis 6 %, das auch ganz oder teilweise durch Frischei, ggf. unter Wasser- oder Milchzusatz, ersetzt sein kann. Kochsalz in einer Menge von 0,5 bis 1 % und Mononatriumglutamat in einer Menge von bis zu 1 %, wobei jedoch 0,05 bis 0,5 % in der Regel genügt. Gewürze können in der erforderlichen Menge je nach Rezeptur hier noch zugegeben werden.

Das Aufbringen dieser Komponenten erfolgt vorzugsweise in einem Agglomerationsschritt, z. B. in einem Paddelmischer oder in einem Dragierkessel. Das Agglomerieren erfolgt durch Aufsprühen von Wasser oder Ei oder Milch oder Fett oder Mischungen daraus. Gegebenenfalls wird das so erhaltene Agglomerat getrocknet. Da beim Agglomerieren eine einheitlichere Granulatgröße anfällt als beim Zerkleinern und überdies die Zusätze hinreichend fest gebunden werden, findet beim späteren Lagern kein Absetzen von Feinteilen oder eine Trennung von nach der Extrusion zugefügten trockenen Zusätzen statt.

Das extrudierte, zerkleinerte und anschließend becoatete Produkt findet Verwendung als Knödelbrot für Semmelknödeln, das entweder zu 100 % aus Extrudat besteht oder in Mischungen mit üblicherweise verwendeten Semmelwürfeln eingesetzt werden kann. Selbstverständlich können auch andere Formen als Semmelknödel in an sich bekannter Weise ausgebildet werden, z. B. Serviettenknödel, wobei bis zu 50 % Mehl oder Hefeteig zugesetzt werden kann oder für andere übliche Verwendungen, zu denen man Semmelknödelteig verwendet, z. B. für gefüllte Kalbsbrust. Obwohl hier der Vorteil der Koherenz des Knödels keine Rolle spielt, ist doch die Größe, Lockerheit und die Schnittfestigkeit von Vorteil.

Da ein solches kochextrudiertes Produkt leicht in gleichmäßiger und reproduzierbarer Qualität hergestellt werden kann und diese Reproduzierbarkeit auch beim Becoaten und Agglomerieren aufrecht erhalten wird, eignet sich ein solches Semmelbrot gut für die industrielle Herstellung von Semmelknödeln gleichbleibender Qualität, und zwar sowohl in loser Mischung als auch abgefüllt in Kochbeuteln.

Die Verwendung dieses kochextrudierten Produktes als Knödelbrot führt zu einer großen Einsparung an Gesamtenergie und Zeitaufwand für die Herstellung des Produktes, bietet erheblich größere Eingriffsmöglichkeiten in der Rezeptur des Endproduktes als dies nach den klassischen Verfahren der Fall ist, stellt ein voll kontinuierliches Verfahren dar, das in einer Maschinenstraße vom Ausgangsmaterial bis zum Endprodukt abläuft und erfordert bei geeigneter Verfahrensführung keine Trocknung.

Die folgenden Beispiele erläutern die Erfindung.

**Beispiel 1**

Extrusionsmischung
befeuchtet auf 17 % Wassergehalt

50 % Weizenmehl
(Manitoba, Eiweiß ca. 14 %)
48,5 % Semmelbrösel
1,5 % Speisesalz

Extrusionsbedingungen:
Temperatur kurz vor dem Extruderkopf 135° C
Schneckendrehzahl 450 Upm

Der Druck ist durch die Temperatur und den Wassergehalt gegeben.

Bei einer Extruderdüse von 5 mm Durchmesser ergibt sich ein feinporiges Extrudat- von brotähnlichem Aussehen, das auf das 3 bis 4-fache expandiert ist, also als Zylinder von 15 bis 20 mm Durchmesser mit einem Wassergehalt von ca. 9 % austritt.

Das Extrudat wird in einer Schneidemühie auf eine Korngröße von 2 bis 13 mm zerkleinert und ggf. auf diese Größe abgesiebt.

Bei der Verwendung als Knödelbrot werden dem Extrudat die üblichen Zutaten wie Milch, Eier, Gewürze als Coating zugesetzt. Man läßt den erhaltenen angemachten Knödelteig kurz ziehen, wie dies auch bei Knödeln aus normalem Knödelbrot aus Semmeln üblich ist (5 bis 10 Minuten) und formt dann Semmelknödel, die in Salzwasser gekocht werden.

Die erhaltenen Semmelknödel haben gute sensorische Eigenschaften.

Das so erhaltene Knödelbrot kann auch mit 50 % Semmelwürfel, so daß also ein Gemisch aus 50 % Extrudat und 50 % Semmelwürfel vorliegt, in gleicher Weise, wie oben beschrieben als Semmelknödel zubereitet werden.

Auch hier wird als Ergebnis ein ausgezeichneter Semmelknödel erhalten.

**Beispiel 2**

Die Herstellung des Extrudats erfolgt wie in Beispiel 1, jedoch ohne Semmelbrösel.

60 Gewichtsteile Extrudat werden in einen Mischer eingebracht und mit folgenden Komponenten gemischt.

1,3 Gewichtsteile Kochsalz
0,5 Gewichtsteile Mononatriumglutamat
0,2 Gewichtsteile Petersilienblätter, getrocknet,
6 Gewichtsteile Trockeneigelb
5 Gewichtsteile Magermilchpulver
12 Gewichtsteile Weizenstärke
15 Gewichtsteile gehärtetes Pflanz enfett.

Das Pflanzenfett wird erhizt und flüssig aufgesprüht, wordurch die anderen Komponenten sich mit den Extrudatbruchstücken verbinden, d.h. ein Agglomerat bilden.

Die Semmelknödel werden zubereitet, indem ca. 250 g in 1/4 Liter heißes Wasser eingerührt werden. Man läßt den Teig kurz ziehen, wie in Beispiel 1 beschrieben und formt danach Knödel aus. Danach werden die Knödel in Salzwasser gekocht. Das Ergebnis ist ein Semmelknödel mit sehr guten sensorischen Eigenschaften.

**Beispiel 3**

Die Herstellung des Granulats erfolgt wie in Beispiel 2. Statt dann in heißes Wasser einzurühren, werden Serviettenknödel zubereitet, indem ca. 250 g Granulat in einen länglichen zylindrischen Kochbeutel eingebracht oder in ein Tuch eingeschlagen werden. Der Kochbeutel oder das gefüllte Tuch werden dann, je nach Größe, ca. 20 Minuten in fast siedendem Wasser oder Salzwasser ziehen gelassen. Das Ergebnis ist ein Serviettenknödel mit sehr guten sensorischen Eigenschaften.

**Beispiel 4**

Die Herstellung des Extrudats erfolgt wie in Beispiel 1, jedoch mit nur 25 % Semmelbrösel.

62 Kilogramm Extrudat werden in einen Mischer eingebracht dann mit folgenden Komponenten gemischt.

0,23 Kilogramm Petersilie getrocknet
0,7 Kilogramm Kochsalz
3 Kilogramm Vollei (trocken)
1,5 Kilogramm Gewürze
10 Kilogramm Stärke
22,6 Kilogramm Magermilch

Die Magermilch wird aufgesprüht, wodurch die anderen Komponenten mit den Extrudatbruchstücken ein Agglomerat bilden.

Das Agglomerat wird bei 70° C auf dem Wirbelschichttrockner auf einen Endwassergehalt von 8 % getrocknet. Das Produkt wurde je zur Hälfte (ca. 40 kg) einerseits unter Stickstoff in Alu-Verbundbeutel mit 5 kg Inhalt und andererseits in die bekannten Kochbeutel von je 6 Semmelknödel pro Packung, die wiederum in Alu-Verbundfolie verpackt sind evenfalls unter Stickstoff abgepackt.

3 Monate später ergab die sensorische Bewertung eine gute Semmelknödelqualität, wobei die Zubereitung aus der Großpackung wie in Beispiel 2 angegeben erfolgte und die Knödel in den Kochbeutein in bekannter Weise durch kurzes Quellen in kaltem Wasser und dann kurzes Aufkochen und 1/4-stündiges Ziehenlassen zubereitet wurden.

Das durch Extrusion hergestellbe agglomerierte Semmelbrot eignet sich vorzüglich zur industriellen Füllung von Kochbeuteln, also zur Herstellung von kochfertigen Semmelknüdel im Kochbeutel. Es zeigt gute Lagerfähigkeit und ergibt nach dem üblichen Ziehen und Kochenlassen ausgezeichnete lockere Semmelknödel von reproduzierbarer und gleichbleibender Qualität.

Die allgemeine Rezeptur für die bevorzugte ausführungsform der Ausgangsmischung für das Extrudieren kann wie folgt angegeben werden:

Weizenmehl
Feuchtigkeit des Teiges 17 bis 22 % H$_2$O, und vorzugsweise ca. 20 %
Zusatz von 20 bis 50 % Semmelbrösel, vermahlenes Rückbrot, Paniermehl oder Extrudatfeinanteil
1 bis 5 % NaCl ·
ca. 0,3 % Genußsäure (z. B. Zitronensäure) (Zur Definition Genußsäure siehe Römpps Chemie Lexikon, Franckh'sche Verlagshandlung Stuttgart, 8. Auflage, Seite 14, 41)
5 bis 15 % Roggenmehl, insbesondere 10 %
ca. 25 % granulierter Hefevorteig
ca. 5 % Hefesuspension (zu 100 g Hefe auf 1 l Wasser)
ca. 0,5 % Zucker

Als Weizenmehl wird vorzugsweise ein geringer vermahlenes Weizenmehl, also ein solches mit höherem Aschegehalt eingesetzt.

Der Hefeteig kann wie folgt hergestellt werden:

5 kg Weizenmehl, 200 g Presshefe, 90 g Salz und 2,5 l Wasser werden miteinander gut angeteigt. Diesen Teig läßt man vorzugsweise ca. 1 Stunde "gehen". Dann wird der Teig entweder homogen in die Extrusionsmischung eingearbeitet, oder, was noch zweckmäßiger ist, mit der noch nicht mit Wasser versetzten Extrusionsmischung gut durchgearbeitet, was einen krümeligen Teig ergibt. Dann wird nach Einstellung des gewünschten Wassergehaltes der gut homogenisierte Teig mindestens eine Stunde zwischengelagert, damit er nochmals "gehen" kann. Diese Zwischenlagerung wird auch durchgeführt, wenn Hefesuspension im Teig eingesetzt wird. Erst dann wird der Teig extrudiert.

**Patentansprüche**

1. Mischung für Semmelknödel auf der Basis von Weizenmehl, ggf. mit Weizengrieß, Semmelbrösel und üblichen Zusätzen, wie Eimasse, Salz, Gewürze, dadurch gekennzeichnet, daß sie erhältlich ist durch Thermoextrusion der Ausgangsmischung bei einer Extrudertemperatur vor dem Extruderkopf von 110 bis 170° C, einem Druck im Extruder von 150 bis 200 bar beim Einschneckenextruder bzw. 35 bis 100 bar im Doppelschneckenextruder, und einem Wassergehalt der Extrusionsmischung vor dem Extrudieren zwischen 17 und 22 % unter Aufblähen des Extrudats auf das 2- bis 5-fache, und Zerschneiden des Extrudats auf Korngrößen von 2 bis 13 mm zu einem Material mit offenporigen Schnittflächen und einem Quellwert von 3 bis 5 ml/g, wobei ggf. auf diese Größe ausgesiebt wird, und Agglomerieren mit Ei und/oder Fett und/oder Milch und üblichen Zusätzen und ggf. Trocknen.

2. Mischung nach Anspruch 1, dadurch gekennzeichnet, daß die Extrusionsmischung noch 5 bis 15 Gew.-%, bezogen auf Gesamtmischung vor dem Extrudieren, an Roggenmehl enthält.

3. Mischung nach Anspruch 1 oder 2, dadurch gekennzeichnet, daß die Extrusionsmischung noch bis zu 0,5 Gew.-%, bezogen auf Mischung vor dem Extrudieren, an Genußsäuren enthält.

4. Mischung nach einem der Ansprüche 1 bis 3, dadurch gekennzeichnet, daß sie 10 bis 30 Gew.-%, bezogen auf Extrusionsmischung vor dem Extrudieren, an granuliertem Hefevorteig enthält.

5. Mischung nach einem der Ansprüche 1 bis 3, dadurch gekennzeichnet, daß sie statt Wasserzusatz bis zu 5 %, bezogen auf Extrusionsmischung vor dem Extrudieren, eine Hefesuspension enthält.

6. Verfahren zur Herstellung der Mischung nach einem der Ansprüche 1 bis 5, dadurch gekennzeichnet, daß man Weizenmehl, ggf. unter Zusatz von Weizengrieß und/oder Semmelbrösel, Roggenmehl sowie Hefevorteig und ggf. den für Semmelknödel üblichen Zusätzen einschließlich von Genußsäuren als Extrusionsmischung mit einem Wassergehalt zwischen 17 und 22 % der bekannten Thermoextrusion bei einer Temperatur im Extruder vor dem Extruderkopf von 110 bis 170° C und einem Druck im Extruder von 150 bis 200 bar beim Einschneckenextruder und 35 bis 100 bar beim Doppelschneckenextruder so unterwirft, daß das Extrusionsgut auf das 2-bis 5-fache aufgebläht wird und dieses Extrusionsgut auf Stücke von 2 bis 13 mm mit offenporiger Schnittfläche und einem Quellwert von 3 bis 5 ml/g zerkleinert, ggf. auf diese Größe absiebt und das erhaltene Knödelbrot in an sich bekannter Weise mit Ei und/oder Fett und/oder Milch und ggf. üblichen Zusatzen agglomeriert und ggf. trocknet.

7. Verfahren nach Anspruch 6, dadurch gekennzeichnet, daß man eiweißreiches Mehl als Ausgangsmaterial verwendet.

8. Verfahren nach Anspruch 6 oder 7, dadurch gekennzeichnet, daß man der Extrusionsmischung zusätzlich Eiweiß einverleibt.

9. Verfahren nach Ansprüchen 6 bis 8, dadurch gekennzeichnet, daß das Zerkleinern des Extrudats in einer Schneidmühle erfolgt.

10. Verfahren nach den Ansprüchen 6 bis 9, dadurch gekennzeichnet, daß die Agglomerierung durch Aufsprühen von Fett und Einarbeiten der übrigen Zusätze in einem Mischer in an sich bekannter Weise erfolgt.

11. Verwendung der Mischung nach Anspruch 1 zur industriellen Herstellung von kochfertigen Semmelknödeln im Kochbeutel, ggf. unter Zusatz von bis zu 50 Gew.-% Semmelwürfel oder Semmelbrösel.

## Claims

1. Mixture for bread-based dumplings, based on wheat flour, if appropriate with wheat semolina, breadcrumbs and usual additives, such as an egg preparation, salt, spices, characterized in that it is obtainable by thermo-extrusion of the starting mixture at an extruder temperature of 110 to 170° C in front of the extruder head, a pressure in the extruder of 150 to 200 bar in the case of a single-screw extruder or 35 to 100 bar in a twin-screw extruder, and a water content of the extrusion mixture before extruding of between 17 and 22 %, the extrudate expanding by a factor of 2 to 5, and cutting-up the extrudate to grain sizes of 2 to 13 mm to give a material with open-pored cutting surfaces and a swelling value of 3 to 5 ml/g, the product being sieved to this size if desired, and agglomerating with egg and/or fat and/or milk and usual additives, and drying if appropriate.

2. Mixture according to Claim 1, characterized in that the extrusion mixture also contains 5 to 15 % by weight of rye flour, relative to the total mixture before extrusion.

3. Mixture according to Claim 1 or 2, characterized in that the extrusion mixture also contains up to 0.5 % by weight of flavouring acids, relative to the mixture before extrusion.

4. Mixture according to one of Claims 1 to 3, characterized in that it contains 10 to 30 % by weight of granulated yeast predough, relative to the extrusion mixture before extrusion.

5. Mixture according to one of Claims 1 to 3, characterized in that it contains, instead of added water, up to 5 % of a yeast suspension, relative to the extrusion mixture before extrusion.

6. Process for preparing the mixture according to one of Claims 1 to 5, characterized in that wheat flour, if appropriate with an addition of wheat semolina and/or breadcrumbs, rye flour as well as yeast predough and, if appropriate, additives usual for bread-based dumplings, including flavouring acids, is subjected as an extrusion mixture of a water content between 17 and 22 % to the known thermo-extrusion at a temperature in the extruder of 110 to 170° C in front of the extruder head and a pressure in the extruder of 150 to 200 bar in the case of a single-screw extruder and 35 to 100 bar in the case of a twin-screw extruder, in such a way that the extrusion material is expanded by a factor of 2 to 5 and this extrusion material is comminuted to pieces of 2 to 13 mm with an open-pore cutting surface and a swelling value of 3 to 5 ml/g, the product being sieved to this size if desired, and the dumpling bread obtained is agglomerated in a manner known per se with egg and/or fat and/or milk and, if appropriate, usual additives and, if appropriate, dried.

7. Process according to Claim 6, characterized in that protein-rich flour is used as the starting material.

8. Process according to Claim 6 or 7, characterized in that egg white is additionally incorporated in the extrusion mixture.

9. Process according to Claims 6 to 8, characterized in that comminution of the extrudate is carried out in a cutting mill.

10. Process according to Claims 6 to 9, characterized in that the agglomeration is carried out by spraying on fat and incorporating the other additives in a mixer in a manner known per se.

11. Use of the mixture according to Claim 1 for the industrial production of ready-to-boil bread-based dumplings in a boiling bag, if appropriate with an addition of up to 50 % by weight of bread cubes or breadcrumbs.

## Revendications

1. Mélange pour Semmelknödel à base de farine de froment, le cas échéant avec du gruau de froment, de la chapelure et des additifs classiques tels que des oeufs, du sel, des épices, caractérisé en ce qu'il peut être obtenu par thermo-extrusion du mélange de départ à une température de l'extrudeuse de 110 à 170° C en avant de la tête d'extrusion, une pression dans l'extrudeuse de 150 à 250 bars dans le cas d'une extrudeuse à une seule vis et de 35 à 100 bars dans le cas d'une extrudeuse à deux vis, et avec une teneur en eau du mélange à extruder, avant l'extrusion, comprise entre 17 et 22 % avec gonflement d'un facteur 2 à 5 du produit extrudé, et fragmentation du produit extrudé à des grosseurs de grain de 2 à 13 mm avec formation d'une matière dont les plans de coupe présentent des pores ouverts et dont le pouvoir gonflant est de 3 à 5 ml/g, en procédant éventuellement à un tamisage à cette grosseur de grain, et agglomération avec de l'oeuf et/ou de la matière grasse et/ou du lait et des additifs classiques et, le cas échéant, séchage.

2. Mélange suivant la revendication 1, caractérisé en ce que le mélange à extruder contient encore 5 à 15 % en poids de farine de seigle, par rapport au mélange total avant l'extrusion.

3. Mélange suivant la revendication 1 ou 2, caractérisé en ce que le mélange à extruder contient encore jusqu'à 0,5 % en poids d'acides alimentaires, par rapport au mélange avant l'extrusion.

4. Mélange suivant l'une des revendications 1 à 3, caractérisé en ce qu'il contient 10 à 30 % en poids de préparation de levure en pâte granulée, par rapport au mélange à extruder avant l'extrusion.

5. Mélange suivant l'une des revendications 1 à 3, caractérisé en ce qu'il contient une suspension de levure au lieu d'une addition d'eau, jusqu'à 5 % par rapport au mélange à extruder avant l'extrusion.

6. Procédé de préparation du mélange suivant l'une des revendications 1 à 5, caractérisé en ce qu'on soumet de la farine de froment, le cas échéant additionnée de gruau de froment et/ou de chapelure, de farine de seigle ainsi que d'une préparation de levure en pâte et, le cas échéant, des additifs classiques pour Semmelknödel y compris des acides alimentaires, comme mélange à extruder ayant une teneur en eau entre 17 et 22 %, à la thermo-extrusion connue à une température dans l'extrudeuse en avant de la tête d'extrusion de 110 à 170° C et à une pression dans l'extrudeuse de 150 à 200 bars dans le cas d'une extrudeuse à une seule vis et de 35 à 100 bars dans le cas d'une extrudeuse à deux vis, de façon telle qu'on fait gonfler cette matière extrudée d'un facteur 2 à 5 et qu'on la fragmente en morceaux de 2 à 13 mm présentant un plan de coupe à pores ouverts et ayant un pouvoir gonflant de 3 à 5 ml/g, on la tamise éventuellement à cette grosseur et on agglomère d'une manière connue le pain en boulettes obtenu avec de l'oeuf et/ou de la matière grasse et/ou du lait et, le cas échéant, les additifs classiques et on le sèche éventuellement.

7. Procédé suivant la revendication 6, caractérisé en ce qu'on utilise comme matière de départ de la farine riche en protides.

8. Procédé suivant la revendication 6 ou 7, caractérisé en ce qu'on incorpore un supplément de protides au mélange à extruder.

9. Procédé suivant les revendications 6 à 8, caractérisé en ce que la fragmentation du corps extrudé est effectuée dans un hachoir.

10. Procédé suivant les revendications 6 à 9, caractérisé en ce que l'agglomération est effectuée d'une manière connue par projection de matière grasse et incorporation des additifs restants dans un mélangeur.

11. Utilisation du mélange suivant la revendication 1 pour la fabrication industrielle de Semmelknödel prêts à cuire dans une enveloppe pour la cuisson, éventuellement avec addition d'une proportion allant jusqu'à 50 % en poids de miettes de pain de forme cubique ou de chapelure.